# EUROPEAN PATENT APPLICATION

(11) **EP 4 428 949 A1**
(43) Date of publication of application: **11.09.2024**
(21) Application number: 22911998.7
(22) Date of filing: 22.12.2022
(51) Int. Cl.: H01M 4/36, H01M 4/525, H01M 4/505, H01M 4/62, H01M 10/052, C01G 53/00, H01M 4/02

(54) **CATHODE ACTIVE MATERIAL FOR LITHIUM SECONDARY BATTERY AND METHOD FOR MANUFACTURING SAME**

(30) Priority: 23.12.2021 KR 20210185900
(71) Applicant: LG Chem, Ltd., Yeongdeungpo-gu Seoul 07336 (KR)
(72) Inventor: EOM, Jun Ho, Daejeon 34122 (KR); HAN, Song Yi, Daejeon 34122 (KR); LIM, Chae Jin, Daejeon 34122 (KR); KIM, Ji Hye, Daejeon 34122 (KR); LEE, Jun Won, Daejeon 34122 (KR); KWAK, No Woo, Daejeon 34122 (KR)
(74) Representative: Hoffmann Eitle
(86) International application number: PCT/KR2022/021114
(87) International publication number: WO 2023/121365

(57) **Abstract**

The present invention relates to a cathode active material for a lithium secondary battery and a method for manufacturing the cathode active material.

## Description

### TECHNICAL FIELD

### Cross-reference to Related Applications

This application claims the benefit of Korean Patent Application No. 2021-0185900, filed on December 23, 2021, in the Korean Intellectual Property Office, the disclosure of which is incorporated herein in its entirety by reference.

### Technical Field

The present invention relates to a positive electrode active material for a lithium secondary battery and a method for preparing the positive electrode active material.

### BACKGROUND ART

As technology development and demand for mobile devices have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material of a lithium secondary battery, a lithium transition metal composite oxide is used. Among such lithium transition metal composite oxides, a lithium cobalt composite metal oxide such as LiCoO₂ which has a high functional voltage and excellent capacity properties has been mainly used. However, LiCoO₂ has very poor thermal properties due to the destabilization of a crystal structure according to de-lithium. Also, LiCoO₂ is expensive, and thus, has a limitation in being used as a power source for electric vehicles or the like in a large amount.

As a material to replace LiCoO₂, a lithium manganese composite metal oxide (LiMnO₂. LiMn₂O₄, and the like), a lithium iron phosphate compound (LiFePO₄ and the like), or a lithium nickel composite metal oxide (LiNiO₂ and the like) and the like has been developed. Among the above materials, research and development has been actively conducted on a lithium nickel composite metal oxide which has a high reversible capacity of about 200 mAh/g, thereby easily implementing a high capacity battery. However, when compared with LiCoO₂, LiNiO₂ has a lower thermal stability, and has a problem in that when an internal short circuit occurs due to external pressure or the like in a charged state, a positive electrode active material itself is decomposed, causing the rupture and ignition of a battery. Accordingly, as a method for improving the thermal stability of LiNiO₂, which is low, while maintaining the excellent reversible capacity thereof, a lithium-nickel-cobalt metal oxide in which a part of Ni is substituted with Co, Mn or Al has been developed.

However, in the case of the lithium-nickel-cobalt metal oxide, the structural stability is low and the capacity is low, and in particular, when the content of nickel is increased to increase the capacity properties, there is a problem in that the nickel is oxidized from Ni²⁺ to Ni³⁺ or Ni⁴⁺ as charging and discharging processes proceed, and accordingly, rapid oxygen de-intercalation proceeds, resulting in further degrading the structural stability.

Therefore, there is a demand for the development of a positive electrode active material including a lithium-nickel-cobalt metal oxide containing a high content of Ni exhibiting high capacity properties, wherein the lithium-nickel-cobalt metal oxide has excellent structural stability, so that it is possible to manufacture a battery having a high capacity and high lifespan.

### [Prior Art Document]

### [Patent Document]

Japanese Patent Laid-Open Publication No. 2010-92848

### DISCLOSURE OF THE INVENTION

### TECHNICAL PROBLEM

An object of the present invention is to prepare a positive electrode active material including a lithium transition metal oxide containing a high content of nickel, but having improved lifespan properties and suppressed gas generation at high temperatures by controlling the temperature of primary heat treatment and secondary heat treatment when coating the surface of a lithium transition metal oxide particle and a crystal grain.

### TECHNICAL SOLUTION

In order to achieve the above object, the present invention provides a method for preparing a positive electrode active material, the method including (S1) preparing a positive electrode active material precursor including nickel, cobalt, and manganese, and containing 60 mol% or greater of nickel in all metals excluding lithium, (S2) mixing the positive electrode active material precursor with a lithium raw material and performing primary heat treatment thereon at 660 °C to 800 °C to form a lithium transition metal oxide in the form of a secondary particle in which primary particles are aggregated, (S3) mixing the lithium transition metal oxide with a cobalt ion-containing source and performing secondary heat treatment thereon at 640 °C to 800 °C to form a secondary heat-treated product, (S4) washing the secondary heat-treated product, and (S5) dry-mixing the washed secondary heat-treated product with a boron coating source and performing heat treatment thereon.

In addition, the present invention provides a positive electrode active material including a lithium transition metal oxide containing nickel, cobalt, and manganese, and in the form of a secondary particle in which primary particles are aggregated, wherein a cobalt-containing coating layer is formed at the interface between the primary particles positioned on the surface and inside of the lithium transition metal oxide secondary particle, wherein the primary particle has a content of 7.0 mol% or greater of cobalt with respect to all metals, and a spectrum measured for the lithium transition metal oxide by TEM-EELS, which is a combination of transmission electron microscopy (TEM) and electron energy loss spectroscopy (EELS), includes a first peak in a region corresponding from the surface of a primary particle positioned in a surface portion of the secondary particle to a depth of 50 nm, and a second peak in a region corresponding from the surface of a primary particle positioned in a core portion of the secondary particle to a depth of 50 nm, wherein the surface portion of the secondary particle is a region corresponding from the surface of the secondary particle to a depth of 50 nm from the surface of the same, and the core portion of the secondary particle is a region corresponding from the surface of the secondary particle to a depth greater than 3 um, wherein the first peak and the second peak are peaks in the range of 180 eV to 200 eV in the TEM-EELS spectrum.

### ADVANTAGEOUS EFFECTS

According to the present invention, it is possible to prepare a positive electrode active material having improved structural stability by adjusting the cobalt doping degree of a crystal grain and the surface of a lithium transition metal oxide particle containing a high content of nickel, thereby implementing a coating effect, and ultimately forming a boron and cobalt composite coating portion.

When a secondary battery is manufactured using a positive electrode active material prepared according to the present invention, the high-temperature lifespan properties may be improved and the amount of gas generation may be reduced.

### BRIEF DESCRIPTION OF THE DRAWINGS

FIG. 1(a) and FIG. 1(b) respectively show scanning electron microscopy (SEM) images of surfaces of positive electrode active materials prepared in Examples 1 and 2.
FIG. 2(a) and FIG. 2(b) respectively show SEM images of surfaces of positive electrode active materials prepared in Comparative Example 1 and Comparative Example 4.
FIG. 3(a) and FIG. 3(b) respectively show TEM data on the surface and inside of the positive electrode active material prepared in Example 1.
FIG. 4(a) and FIG. 4(b) respectively show TEM data on the surface and inside of the positive electrode active material prepared in Example 2.
FIG. 5 show TEM data on the surface of a positive electrode active material prepared in Comparative Example 3.
FIG. 6 is a graph showing the high-temperature lifespan properties of secondary batteries manufactured using positive electrode active materials prepared in Examples and Comparative Examples.
FIG. 7 is a graph showing the amount of gas generation during high-temperature storage of secondary batteries manufactured using positive electrode active materials according to Examples and Comparative Examples.
FIG. 8 shows (a) a TEM-EELS measurement position and (b) a TEM-EESL spectrum for a surface portion of a secondary particle of Example 1.
FIG. 9 shows (a) a TEM-EELS measurement position and (b) a TEM-EESL spectrum for a core portion of a secondary particle of Example 1.
FIG. 10 shows (a) a TEM-EELS measurement position and (b) a TEM-EESL spectrum for a surface portion of a secondary particle of Example 2.
FIG. 11 shows (a) a TEM-EELS measurement position and (B) a TEM-EESL spectrum for a core portion of a secondary particle of Example 2.
FIG. 12 shows (a) a TEM-EELS measurement position and (b) a TEM-EESL spectrum for a surface portion of a secondary particle of Comparative Example 5.
FIG. 13 shows (a) a TEM-EELS measurement position and (b) a TEM-EESL spectrum for a core portion of a secondary particle of Comparative Example 5.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Method for preparing positive electrode active material

A method for preparing a positive electrode active material of the present invention is characterized by including (S1) preparing a positive electrode active material precursor including nickel, cobalt, and manganese, and containing 60 mol% or greater of nickel in all metals excluding lithium, (S2) mixing the positive electrode active material precursor with a lithium raw material and performing primary heat treatment thereon at 660 °C to 800 °C to form a lithium transition metal oxide in the form of a secondary particle in which primary particles are aggregated, (S3) mixing the lithium transition metal oxide with a cobalt ion-containing source and performing secondary heat treatment thereon at 640 °C to 800 °C to form a secondary heat-treated product, (S4) washing the secondary heat-treated product, and (S5) dry-mixing the washed secondary heat-treated product with a boron coating source and performing heat treatment thereon.

### Step (S1)

A positive electrode active material precursor including nickel, cobalt, and manganese, and containing 60 mol% or greater of nickel in all metals excluding lithium is prepared.

The positive electrode active material precursor may be a commercially available positive electrode active material precursor purchased and used, or may be prepared according to a method for preparing a positive electrode active material precursor well known in the art.

For example, the precursor may be prepared by adding an ammonium cation-containing complex formation agent and a basic compound to a transition metal solution containing a nickel-containing raw material, a cobalt-containing raw material, a manganese-containing raw material, and subjecting the mixture to a co-precipitation reaction.

The nickel-containing raw material may be, for example, an acetate, a nitrate, a sulfate, a halide, a sulfide, a hydroxide, an oxide, an oxyhydroxide, or the like, which contains nickel, and may be, specifically, Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄ ·6H₂O, a fatty acid nickel salt, a nickel halide, or a combination thereof, but is not limited thereto.

The cobalt-containing raw material may be an acetate, a nitrate, a sulfate, a halide, a sulfide, a hydroxide, an oxide, an oxyhydroxide, or the like, which contains cobalt, and may be, specifically, Co(OH)₂, CoOOH, Co(OCOCH₃)₂·4H₂O, Co(NO₃)₂·6H₂O, CoSO₄, Co(SO₄)₂·7H₂O, or a combination thereof, but is not limited thereto.

The manganese-containing raw material may be, for example, an acetate, a nitrate, a sulfate, a halide, a sulfide, a hydroxide, an oxide, an oxyhydroxide, or a combination thereof, which contains manganese, and may be, specifically, a manganese oxide such as Mn₂O₃, MnO₂, and Mn₃O₄, a manganese salt such as MnCO₃, Mn(NO₃)₂, MnSO₄, manganese acetate, dicarboxylic acid manganese, citric acid manganese, and fatty acid manganese salt, manganese oxyhydroxide, manganese chloride, or a combination thereof, but is not limited thereto.

The transition metal solution may be prepared by adding a nickel-containing raw material, a cobalt-containing raw material, and a manganese-containing raw material to a solvent, specifically water or a mixed solvent of water and an organic solvent which can be uniformly mixed with water (for example, an alcohol, etc.), or by mixing an aqueous solution of a nickel-containing raw material, an aqueous solution of a cobalt-containing raw material, and a manganese-containing raw material.

The ammonium cation-containing complex formation agent may be, for example, NH₄OH, (NH₄)₂SO₄, NH₄NO₃, NH₄Cl, CH₃COONH₄, NH₄CO₃, or a combination thereof, but is not limited thereto. Meanwhile, the ammonium cation-containing complex formation agent may be used in the form of an aqueous solution, and at this time, water, or a mixture of an organic solvent (for example, an alcohol, etc.) which may be uniformly mixed with water and water may be used as a solvent.

The basic compound may be a hydroxide of an alkali metal or an alkaline earth metal such as NaOH, KOH, or Ca(OH)₂, a hydrate thereof, or a combination thereof. The basic compound may also be used in the form of an aqueous solution, and at this time, water, or a mixture of an organic solvent which may be uniformly mixed with water (for example, an alcohol, etc.) and water may be used as a solvent.

The basic compound is added to control the pH of a reaction solution, and may be added in an amount such that the pH of a metal solution is 11 to 13.

Meanwhile, the co-precipitation reaction may be performed in an inert atmosphere, such as in a nitrogen atmosphere or in an argon atmosphere, at a temperature of 40 °C to 70 °C. Through the above process, particles of a nickel-cobalt-manganese hydroxide are generated, and precipitated in the reaction solution. By controlling the concentration of the nickel-containing raw material, the cobalt-containing raw material, and the manganese-containing raw material, a precursor having a nickel content of 60 mol% or greater in the total content of metals may be prepared. The precipitated nickel-cobalt-manganese hydroxide particles are separated according to a typical method, and then dried to obtain a nickel-cobalt-manganese precursor. The precursor may be a secondary particle formed by the aggregation of primary particles.

### Step (S2)

The positive electrode active material precursor is mixed with a lithium raw material and the mixture is subjected to primary heat treatment at 660 °C to 800 °C to form a lithium transition metal oxide in the form of a secondary particle in which primary particles are aggregated.

In the present invention, a "primary particle" means the smallest particle unit distinguished as one mass when a cross-section of a positive electrode active material is observed through a scanning electron microscope (SEM), and may be formed of one crystal grain, or formed of a plurality of crystal grains.

In the present invention, a "secondary particle" means a secondary structural body formed by the aggregation of a plurality of the primary particles.

The lithium raw material may be a sulfate, a nitrate, an acetate, a carbonate, an oxalate, a citrate, a halide, a hydroxide, an oxyhydroxide, or the like, which contains lithium, and is not particularly limited as long as it may be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or the like, and any one thereof or a mixture of two or more thereof may be used.

The lithium transition metal oxide is a highly-concentrated Ni-rich-based lithium transition metal oxide containing 60 mol% or greater of nickel in all metals excluding lithium, and more preferably, may contain nickel in 70 mol% or greater, or 80 mol% or greater, and more preferably 85 mol% or greater. When the content of nickel (Ni) in the total metal content of the lithium transition metal oxide excluding lithium satisfies 60 mol% or greater, a high capacity may be secured.

More specifically, the lithium transition metal oxide may be represented by chemical Formula 1 below.

[Chemical Formula 1] LiₐNi_{1-(b+c+c)}Co_{b}Mn_{c}Q_{d}O₂

In the above chemical formula,

Q is one or more selected from the group consisting of Al, Si, V, Nb, Mo, Ta, Y, La, Sn, Zr, B, W, Mg, Ce, Hf, Ta, Ti, Sr, Ba, F, P, S, and La, and

0.9≤a≤1.1, 0≤b≤0.2, 0≤c≤0.2, 0≤d≤0.1, and 0<b+c+d≤0.4.

In the lithium transition metal oxide of Chemical Formula 1 above, Li may be included in an amount corresponding to a, that is, 0.9≤a≤1.1. If a is less than 0.9, a capacity may be degraded, and if greater than 1.1, particles may be sintered during a firing process, so that it may be difficult to prepare a positive electrode active material. When considering the remarkable effect of improving capacity properties of a positive electrode active material in accordance with the control of the Li content and the balance of sintering when preparing the active material, the Li may be more preferably included in a content of 1.0≤a≤1.05.

In the lithium transition metal oxide of Chemical Formula 1 above, Ni may be included in a content corresponding to 1-(b+c+d), for example, 0.6≤1-(b+c+d)<1. When the content of Ni in the lithium transition metal oxide of Chemical Formula 1 above is 0.6 or greater, an amount of Ni which is sufficient to contribute to charge and discharge is secured, so that a high capacity may be achieved. More preferably, Ni may be included in a content of 0.80≤1-(b+c+d)≤0.99.

In the lithium transition metal oxide of Chemical Formula 1 above, Co may be included in a content corresponding to b, that is, 0≤b≤0.2. When the content of Co in the lithium transition metal oxide of Chemical Formula 1 above is greater than 0.2, costs may be increased. When considering the remarkable effect of improving capacity properties in accordance with the inclusion of Co, the Co may more specifically be included in a content of 0.05≤b≤0.2.

In the lithium transition metal oxide of Chemical Formula 1 above, Mn may be included in a content corresponding to c, that is, 0<c≤0.2. When c in the lithium transition metal oxide of Chemical Formula 1 above is greater than 0.2, output properties and capacity properties of a battery may be rather degraded, so that the Mn may more specifically be included in a content of 0.05≤c≤0.2.

In the lithium transition metal oxide of Chemical Formula 1 above, Q is one or more selected from the group consisting of Al, Si, V, Nb, Mo, Ta, Y, La, Sn, Zr, B, W, Mg, Ce, Hf, Ta, Ti, Sr, Ba, F, P, S, and such a metal element may improve the stability of the active material, thereby improving the stability of a battery. When considering the effect of improving lifespan properties, the Q may be included in a content corresponding to d, that is, 0≤d≤0.2. When Q in the lithium transition metal oxide of Chemical Formula 1 above is greater than 0.2, output properties and capacity properties of a battery may be rather degraded, so that the Q may more specifically be included in a content of 0.05≤d≤0.2.

In addition, when the positive electrode active material precursor and the lithium raw material are mixed, the mixing may be performed such that the molar ratio of Li to a metal (Li/metal ratio) is 1 to 1.3, preferably 1.05 to 1.1, and more preferably 1.04 to 1.09. When the nickel-containing transition metal hydroxide precursor and the lithium-raw material are mixed in the above range, a positive electrode active material exhibiting excellent capacity properties may be prepared.

The primary heat treatment may be performed at a temperature of 660 °C to 800 °C, more preferably 660 °C or higher, 680 °C or higher, 800 °C or lower, or 790 °C or lower, for example, 660 °C to 790 °C.

Since the primary heat treatment is performed in the above range, there are advantages in that a regular atomic arrangement and a capacity in accordance with the nickel composition of the lithium transition metal oxide are secured, and a grain size is appropriately controlled.

The primary heat treatment may be performed in an oxidizing atmosphere. When the primary heat treatment is performed in an oxidizing atmosphere, residual lithium impurities sufficient to form a coating material may be obtained, and a nickel-containing lithium transition metal oxide having excellent grain development may be obtained. For example, when the primary heat treatment is performed in an inert atmosphere such as a nitrogen atmosphere, the amount of residual lithium impurities is increased, and thus a metal oxide is not synthesized, so that it may be difficult to form a coating material.

The primary heat treatment may be performed at a temperature of 660 °C to 800 °C in an oxidizing atmosphere, for 4 hours to 10 hours, or for 4 hours to 7 hours.

### Step (S3)

The lithium transition metal oxide and a cobalt ion-containing source are mixed, and the mixture is subjected to secondary heat treatment at 640 °C to 800 °C to form a secondary heat-treated product.

In Step (S3), through the secondary heat treatment, a cobalt-containing coating layer may be formed at the interface between the primary particles constituting the lithium transition metal oxide secondary particle.

In the manufacturing method of the present invention, by forming a cobalt-containing coating layer at the interface between the primary particles positioned on the surface and inside of the secondary particle as described above, the surface is strengthened before performing a washing process, and ultimately, a composite coating layer containing cobalt may be formed as to be described below. Due to such a coating portion, it is possible to solve the problem of deterioration in structural and chemical stability of a positive electrode active material, and the positive electrode active material may be used in a secondary battery exhibiting excellent high-temperature lifespan properties.

In the present invention, the cobalt ion-containing source may include one or more selected from the group consisting of Co(OH)₂, Co₂O₃, CoCO₃, Co₅(CO₃)₂(OH)₆, Co₃(PO4)₂, CoF₃, CoOOH, Co(OCOCH₃)₂·4H₂O, Co(NO₃)·6H₂O, Co₃O₄, Co(SO₄)₂·7H₂O, and CoC₂O₄, and may more preferably be Co(OH)₂ or Co₃O₄.

The cobalt ion-containing source may be 0.4 parts by weight to 4 parts by weight, or 0.8 parts by weight to 3 parts by weight based on 100 parts by weight of the lithium transition metal oxide. By mixing the cobalt ion-containing source in the above range, an advantage of improving the capacity, high-temperature lifespan/resistance increase, which is expressed in the same composition as a solid solution formed with a suitable coating thickness, may be exhibited.

The secondary heat treatment may be performed at a temperature of 640 °C to 800 °C, more preferably 640 °C or higher, 660 °C or higher, 670 °C or higher, 800 °C or lower, 780 °C or lower, or 750 °C or lower, for example, 660 °C to 780 °C.

By performing the secondary heat treatment in the above range, the cobalt-containing coating layer is formed not only on the surface of the lithium transition metal oxide secondary particle but also at the interface between the primary particles positioned thereinside, so that the advantage of solid diffusion may be seen throughout the surface and a core of the secondary particle.

The secondary heat treatment may be performed at 660 °C to 800 °C for 4 hours to 10 hours, or for 4 hours to 8 hours.

### Step (S4)

The step of washing the secondary heat-treated product may remove a lithium by-product present on the surface of the lithium transition metal oxide particle.

A high-Ni lithium transition metal oxide is structurally unstable compared to a lithium transition metal oxide having a low content of nickel, so that more lithium by-products such as unreacted lithium hydroxide (LiOH) or lithium carbonate (Li₂CO₃) are generated during the preparation process. For example, in the case of a lithium composite metal oxide having a nickel fraction of less than 80 mol%, the amount of lithium by-products after synthesis is about 0.5 wt% to 0.6 wt%, whereas in the case of a lithium composite metal oxide with a nickel fraction of 80 mol% or greater, the amount of lithium by-products after synthesis is as high as about 1 wt%. Meanwhile, when there is a large amount of lithium by-products present in a positive electrode active material, the lithium by-products and an electrolyte react to generate gas and cause a swirling phenomenon, so that high-temperature stability is significantly degraded. Therefore, a washing process to remove lithium by-products from a lithium transition metal oxide containing high-nickel is essentially required.

The washing step may be performed, for example, by introducing a lithium transition metal oxide into a washing solution such as distilled water or tap water, followed by stirring.

The temperature of a washing solution used in the washing may be 1 °C to 80 °C, or 5 °C to 80 °C. In addition, the washing time may be 3 minutes to 60 minutes, more preferably 5 minutes to 40 minutes. When the washing temperature and the washing time satisfy the above ranges, lithium by-products may be effectively removed.

The washing step may be performed by mixing a washing solution and a lithium transition metal oxide at a weight ratio of 100:20 to 100:300, more preferably at a weight ratio of 100:50 to 100:200, and even more preferably at a weight ratio of 100:60 to 100:180. When the mixing ratio of the washing solution and the lithium transition metal oxide satisfies the above range, lithium by-products are efficiently removed and surface defects of the lithium transition metal oxide may be reduced as much as possible.

### Step (S5)

The washed secondary heat-treated product is dry-mixed with a boron coating source and then the mixture is heat-treated.

Through the heat treatment, a boron coating portion may be formed on the surface of a lithium transition metal oxide particle. In the present invention, the surface of a lithium metal oxide particle is coated to improve stability and reduce gas generation.

The boron coating source may include at least one selected from the group consisting of H₃BO₃, B₄C, B₂O₃, BF₃, (C₃H₇O)₃B, (C₆H₅O)₃B, [CH₃(CH₂)₃O]₃B, C₁₃H₁₉O₃, C₆H₅B(OH)₂, and B₂F₄ and may more preferably be H₃BO₃. H₃BO₃ has a relatively low melting point, and thus, may be coated not only on the surface but also partially inside of a secondary particle core, which helps to improve long-term lifespan. The boron coating source may be mixed in 0.01 parts by weight to 0.90 parts by weight based on 100 parts by weight of the lithium transition metal oxide, and may more preferably be mixed in 0.30 parts by weight to 0.60 parts by weight.

In the above range, a cobalt-containing boron coating layer may be formed to a suitable thickness at the interface between the primary particles positioned on the surface and inside of the lithium transition metal oxide secondary particle.

After the washed secondary heat-treated product is dry-mixed with the boron coating source, the mixture may be heat-treated at 200 °C to 750 °C to form the composite coating portion. The heat treatment may more preferably be performed at 200 °C to 500 °C.

In the above range, the formation of a composite coating layer may be facilitated without the generation of unreacted cobalt by-products and an increase in lithium by-products by boron.

In addition, before the washed secondary heat-treated product is dry-mixed with the boron coating source, a drying step may be first performed. For example, after the secondary heat-treated product is washed and dried at 80 °C to 140 °C, the boron coating source may be dry-mixed therewith, and the mixture may be heat treated.

### Positive electrode active material

A positive electrode active material of the present invention includes a lithium transition metal oxide containing nickel, cobalt, and manganese, and in the form of a secondary particle in which primary particles are aggregated, wherein a cobalt-containing coating layer is formed at the interface between the primary particles positioned on the surface and inside of the lithium transition metal oxide secondary particle, wherein the primary particle has a content of 7.0 mol% or greater of cobalt with respect to all metals, and a spectrum measured for the lithium transition metal oxide by TEM-EELS, which is a combination of transmission electron microscopy (TEM) and electron energy loss spectroscopy (EELS), includes a first peak in a region corresponding from the surface of a primary particle positioned in a surface portion of the secondary particle to a depth of 50 nm, and a second peak in a region corresponding from the surface of a primary particle positioned in a core portion of the secondary particle to a depth of 50 nm, wherein the surface portion of the secondary particle is a region corresponding from the surface of the secondary particle to a depth of 50 nm from the surface of the same, and the core portion of the secondary particle is a region corresponding from the surface of the secondary particle to a depth greater than 3 um, wherein the first peak and the second peak are peaks in the range of 180 eV to 200 eV in the TEM-EELS spectrum.

In addition, the intensity ratio of the first peak and the second peak may be 1:0.5 to 1:20, specifically, 1:0.7 to 1:15, or 1:1 to 1:10.

In addition, the first peak may exhibit an intensity of 1×10³ to 30×10³, specifically an intensity of 2×10³ to 30 ×10³, 2×10³ to 28×10³, or 5×10³ to 16×10³.

In addition, the second peak may exhibit an intensity of 20×10³ to 60×10³, or 30×10³ to 50×10³.

Specifically, the TEM-EELS measurement may be performed by a method including preparing a TEM specimen using a focused ion beam (FIB), determining an analysis region in the specimen, and obtaining an EELS spectrum in the analysis region. In addition, conditions for the EELS measurement may be an acceleration voltage of 200 kV and a dispersion of 0.05 eV/channel.

In the TEM-EELS spectrum, peaks appearing in the range of 180 eV to 200 eV, that is, the first peak and the second peak, indicate the presence of boron contained on the surface of the primary particles constituting the lithium transition metal oxide.

That is, when TEM-EELS is measured for primary particles positioned in a surface portion and a core portion of the secondary particle, the lithium transition metal oxide included in the positive electrode active material of the present invention shows a boron peak in a region corresponding from the surface to a depth of 50 nm. In addition, the primary particles positioned in the surface portion of the secondary particle exhibit a higher content of boron than the primary particles positioned in the core portion.

Since boron is contained as described above, it is possible to effectively reduce the BET surface area increased due to washing, thereby securing stability of the positive electrode active material, reduce a resistance increase rate, and implement excellent lifespan properties.

In addition, the primary particles may have a content of cobalt of 10.0 mol% or greater, 12.0 mol% or greater, or 15.0 mol% or greater with respect to all metals.

As described above, the primary particles are aggregated with each other on the surface and inside of the lithium transition metal oxide of the present invention, and a coating layer containing cobalt is formed at the interface between the primary particles. As a result, when compared to a lithium transition metal oxide in which a cobalt-containing coating layer is not formed at the interface between primary particles, the content of cobalt is high both on the surface and inside of a secondary particle.

Since a coating layer is formed at the interface between the primary particles as described above, the stability of the secondary particle is excellent, and there are effects in which the lifespan properties at high temperatures are improved, and problems such as gas generation are suppressed.

The "surface portion" of the secondary particle may refer to a region from the surface of the secondary particle to a depth of 50 nm from the surface of the same, that is, from the outermost surface of the secondary particle to a depth of one between 0 nm and 50 nm. More specifically, the surface portion may refer to a region from the surface of the secondary particle to a depth of 10 nm from the surface of the same, or a region from the surface of the secondary particle to a depth of 7 nm from the surface of the same.

The "core portion" of the secondary particle may refer to a region from the surface of the secondary particle to a depth of greater than 3 µm.

The positive electrode active material may be prepared by the manufacturing method of the present invention described above, and may be represented by [Chemical Formula 1] as described above.

As described above, the lithium transition metal oxide of the present invention may have a concentration gradient in which cobalt gradually decreases from a surface layer of a primary particle constituting the lithium transition metal oxide to the center of the primary particle.

In the present invention, phrase "representing a concentration gradient in which the concentration of a transition metal gradually changes (increases or decreases)" means that the concentration of the transition metal exists in a concentration distribution which gradually changes throughout a particle. Specifically, the concentration distribution shows that a change in the concentration of a transition metal per 1 um in a particle may be 0.1 mol% to 5 mol%, more specifically 0.1 mol% to 3 mol%, and even more specifically 1 mol% to 2 mol% based on the total number of moles of the corresponding metal included in a positive electrode active material.

The positive electrode active material according to the present invention may further include a coating layer on the surface of the lithium transition metal oxide.

The coating layer is formed on the surface of the secondary particle of the lithium transition metal oxide, and may include one or more coating elements (M) selected from the group consisting of B, Li, Al, F, W, Mo, Ti, Mn, Ca, Sr, Zr, Zn, Mg, Ca, Si, Sn, and Nb.

The coating element may be included in an amount of 50 ppm to 5,000 ppm, preferably 50 ppm to 2,000 ppm based on the total weight of the positive electrode active material. If the content of the coating element is too high, the coating layer may be formed excessively thick, which may adversely affect capacity properties, resistance properties, and the like, and if the content of the coating element is too low, an electrolyte blocking effect is insignificant.

As described above, when the coating layer including one or more coating elements selected from the group consisting of B, Li, Al, F, W, Mo, Ti, Mn, Ca, Sr, Zr, Zn, Mg, Ca, Si, Sn, and Nb is included on the surface of the lithium transition metal oxide, the contact of an electrolyte and the lithium transition metal oxide is suppressed by the coating layer, so that there may be an effect of suppressing transition metal elution or gas generation.

### Positive electrode

In addition, the present invention provides a positive electrode for a lithium secondary battery, the positive electrode including a positive electrode active material prepared by the method described above.

Specifically, the positive electrode includes a positive electrode current collector, and a positive electrode active material layer formed on at least one surface of the positive electrode current collector and including the above-described positive electrode active material.

The positive electrode current collector is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 um to 500 µm, and microscopic irregularities may be formed on the surface of the current collector to improve the adhesion of the positive electrode active material. For example, the positive electrode current collector may be used in various forms such as a film, a sheet, a foil, a net, a porous body, a foam, a non-woven body, and the like.

The positive electrode active material layer may include a conductive material and a binder, in addition to the positive electrode active material.

At this time, the positive electrode active material may be included in a content of 80 wt% to 99 wt%, more specifically 85 wt% to 98 wt% based on the total weight of the positive electrode active material layer. When included in the above content range, excellent capacity properties may be exhibited.

At this time, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in 1 wt% to 30 wt% based on the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in 1 wt% to 30 wt% based on the total weight of the positive electrode active material layer.

The positive electrode may be manufactured according to a typical method for manufacturing a positive electrode except that the positive electrode active material described above is used. Specifically, the positive electrode may be manufactured by applying a positive electrode mixture, which is prepared by dissolving or dispersing the positive electrode active material described above, and selectively a binder and a conductive material in a solvent, on a positive electrode current collector, followed by drying and roll-pressing. At this time, the type and content of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like, wherein any one thereof or a mixture of two or more thereof may be used. The amount of the solvent to be used is sufficient if the solvent dissolves or disperses the positive electrode active material, the conductive material, and the binder in consideration of an applying thickness and a manufacturing yield of a slurry, and thereafter, allows the slurry to have a viscosity capable of exhibiting excellent thickness uniformity when applied for manufacturing a positive electrode thereafter.

Alternatively, in another method, the positive electrode may be manufactured by casting the positive electrode mixture on a separate support, and then laminating a film obtained by being peeled off from the support on a positive electrode current collector.

### Lithium secondary battery

In addition, the present invention may manufacture an electrochemical device including the positive electrode. The electrochemical device may specifically be a battery, a capacitor, or the like, and more specifically, may be a lithium secondary battery.

Specifically, the lithium secondary battery includes a positive electrode, a negative electrode positioned opposing the positive electrode, a separator interposed between the positive electrode and the negative electrode, and an electrolyte, and since the positive electrode is the same as described above, a detailed description thereof will be omitted, and hereinafter, only the rest of the components will be described in detail.

Also, the lithium secondary battery may selectively further include a battery case for accommodating an electrode assembly composed of the positive electrode, the negative electrode, and the separator, and a sealing member for sealing the battery case.

In the above lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 um to 500 µm, and as in the case of the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, or amorphous carbon; a metallic compound alloyable with lithium such as Si, Al, Sn, Pb, Zn, Bi, In, Mg, Ga, Cd, an Si alloy, an Sn alloy, or an Al alloy; a metal oxide capable of doping or undoping lithium such as SiO_{β}(0<β< 2), SnO₂, a vanadium oxide, or a lithium vanadium oxide; or a composite including the metallic compound and the carbonaceous material such as an Si-C composite or an Sn-C composite, and any one thereof or a mixture of two or more thereof may be used. Also, a metal lithium thin film may be used as the negative electrode active material. Furthermore, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

The negative electrode active material may be included in 80 wt% to 99 wt% based on the total weight of the negative electrode active material layer.

The binder is a component for assisting in bonding between a conductive material, an active material, and a current collector, and is typically added in 0.1 parts by weight to 10 parts by weight based on a total weight of 100 parts by weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of the negative electrode active material, and may be added in 10 wt% or less, preferably 5 wt% or less based on the total weight of the negative electrode active material layer. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; fluorocarbon; metal powder such as aluminum powder, and nickel powder; a conductive whisker such as zinc oxide and potassium titanate; a conductive metal oxide such as titanium oxide; a conductive material such as a polyphenylene derivative, or the like may be used.

For example, the negative electrode active material layer may be prepared by applying a negative electrode mixture, which is prepared by dissolving or dispersing a negative electrode active material, and selectively a binder and a conductive material in a solvent, on a negative electrode current collector, followed by drying, or may be prepared by casting the negative electrode mixture on a separate support, and then laminating a film obtained by being peeled off from the support on a negative electrode current collector.

Meanwhile, in the lithium secondary battery, the separator is to separate the negative electrode and the positive electrode and to provide a movement path for lithium ions, and any separator typically used as a separator in a lithium secondary battery may be used without particular limitation, and in particular, a separator having high moisture-retention capability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may selectively be used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic C2 to C20 hydrocarbon group, and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having high ion conductivity and a high dielectric constant and a linear carbonate-based compound of low viscosity (e.g., ethylmethyl carbonate, dimethyl carbonate, or diethyl carbonate), the mixture capable of increasing charge/discharge performance of a battery, is more preferable. In this case, the performance of the electrolyte solution may be exhibited excellent when the cyclic carbonate and the chain carbonate are mixed in a volume ratio of about 1:1 to about 1:9.

As the lithium salt, any compound may be used without particular limitation as long as it may provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used to a concentration in the range of 0.1 M to 2.0 M. When the concentration of the lithium salt is included in the above range, the electrolyte has suitable conductivity and viscosity, thereby exhibiting excellent electrolyte performance, and lithium ions may effectively move.

In order to improve the lifespan properties of a battery, suppress a decrease in battery capacity, and improve discharge capacity of the battery, the electrolyte may further include one or more kinds of additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in 0.1 parts by weight to 5 parts by weight based on a total weight of 100 parts by weight of the electrolyte.

A lithium secondary battery including the positive electrode active material according to the present invention as describe above stably exhibits a discharge capacity, output properties, and lifespan properties, which are all excellent, and thus, is useful for portable devices such as a mobile phone, a notebook computer, and a digital camera, and in the field of electric vehicles such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices such as a power tool, an electric car including an electric vehicle (EV), a hybrid electric vehicle (HEV), and a plug-in hybrid electric vehicle (PHEV), or a power storage system.

The external shape of the lithium secondary battery of the present invention is not particularly limited, but may be have a cylindrical shape using a can, a square shape, a pouch shape, a coin shape, or the like.

The lithium secondary battery according to the present invention may be used in a battery cell used as a power source for a small device, and may also be preferably used as a unit cell in a medium-and-large-sized battery module including a plurality of battery cells.

### Examples

Hereinafter, the present invention will be described in detail with reference to examples. However, the following examples are merely illustrative of the present invention and are not intended to limit the scope of the present invention.

### Example 1

Ni_{0.96}Co_{0.02}Mn_{0.02}(OH)₂, LiOH·H₂O, ZrO₂, and Al(OH)₃ were mixed such that the Li/Metal(Ni, Co, and Mn) molar ratio was to be 1.05:1, and primary heat treatment was performed thereon at 710 °C for 5 hours to prepare a lithium transition metal oxide of LiNi_{0.94}Co_{0.03}Mn_{0.02}Al_{0.02}O₂.

Thereafter, Co(OH)₂ was mixed such that the molar ratio of Ni:Co:Mn:Al was to be 92:4:2:2 and then secondary heat treatment was performed thereon at 720 °C for 5 hours to prepare a lithium transition metal oxide with a composition of LiNi_{0.92}Co_{0.04}Mn_{0.02}Al_{0.02}O₂ in which a cobalt coating layer was formed on the surface of a particle.

Thereafter, 200 g of the lithium transition metal oxide with the cobalt coating layer and 240 g of water were mixed (weight ratio of 1:1.2), and the mixture was stirred for 5 minutes to be washed. Thereafter, the washed lithium transition metal oxide was treated with a filter press to have a moisture content of 3% to 15% and then dried at 130 °C.

Thereafter, H₃BO₃ was mixed such that the weight ratio of the dried lithium transition metal oxide to the H₃BO₃ was to be 100:0.57 and then heat-treated at 300 °C for 4 hours to prepare a positive electrode active material.

### Example 2

A positive electrode active material was prepared in the same manner as in Example 1 except that the temperature of the primary heat treatment was changed to 720 °C, and the temperature of the secondary heat treatment was changed to 680 °C.

### Comparative Example 1

A positive electrode active material was prepared in the same manner as in Example 1 except that the temperature of the primary heat treatment was changed to 740 °C, and the temperature of the secondary heat treatment was changed to 600 °C.

### Comparative Example 2

A positive electrode active material was prepared in the same manner as in Example 1 except that the temperature of the primary heat treatment was changed to 640 °C, and the temperature of the secondary heat treatment was changed to 720 °C.

### Comparative Example 3

A lithium transition metal oxide with a composition of LiNi_{0.92}Co_{0.04}Mn_{0.02}Al_{0.02}O₂ was prepared in the same manner as in Example 1 except that Co(OH)₂ was not mixed.

### Comparative Example 4

Ni_{0.96}Co_{0.02}Mn_{0.02}(OH)₂, LiOH·H₂O, ZrO₂, and Al(OH)₃ were mixed such that the Li/Metal(Ni, Co, and Mn) molar ratio was to be 1.05:1, and primary heat treatment was performed thereon at 720 °C for 5 hours to prepare a lithium transition metal oxide of LiNi_{0.94}Co_{0.02}Mn_{0.02}Al_{0.02}O₂.

Thereafter, the weight ratio of the lithium transition metal oxide to H₃BO₃ was allowed to be 100:0.57, and Co(OH)₂ was mixed such that the molar ratio of Ni:Co:Mn:Al was to be 92:4:2:2 and then secondary heat treatment was performed thereon at 690 °C for 5 hours to prepare a lithium transition metal oxide with a composition of LiNi_{0.92}Co_{0.04}Mn_{0.02}Al_{0.02}O₂ in which a cobalt+boron coating layer was formed on the surface of a particle.

### Comparative Example 5

Ni_{0.96}Co_{0.02}Mn_{0.02}(OH)₂, LiOH·H₂O, ZrO₂, and Al(OH)₃ were mixed such that the Li/Metal(Ni, Co, and Mn) molar ratio was to be 1.05:1, and primary heat treatment was performed thereon at 720 °C for 5 hours to prepare a lithium transition metal oxide of LiNi_{0.94}Co_{0.02}Mn_{0.02}Al_{0.02}O₂.

Thereafter, lithium acetate was mixed in 100 mL of ethanol (ethanol:lithium acetate weight ratio was 100:1), and cobalt acetate was mixed such that the molar ratio of Ni:Co:Mn:Al was to be 92:4:2:2 to prepare a transition metal-containing solution.

Thereafter, after a sol-gel reaction was performed at 70 °C, vacuum drying was performed at 150 °C, and then secondary heat treatment was performed at 690 °C for 5 hours to prepare a lithium transition metal oxide with a composition of LiNi_{0.92}Co_{0.04}Mn_{0.02}Al_{0.02}O₂ in which a cobalt coating layer was formed on the surface of a secondary particle and the surface of a primary particle.

### Experimental Example 1

Using a scanning electron microscope, the surface of the secondary particle of the positive electrode active material prepared in each of Examples 1 and 2, and Comparative Examples 1 and 4 was observed.

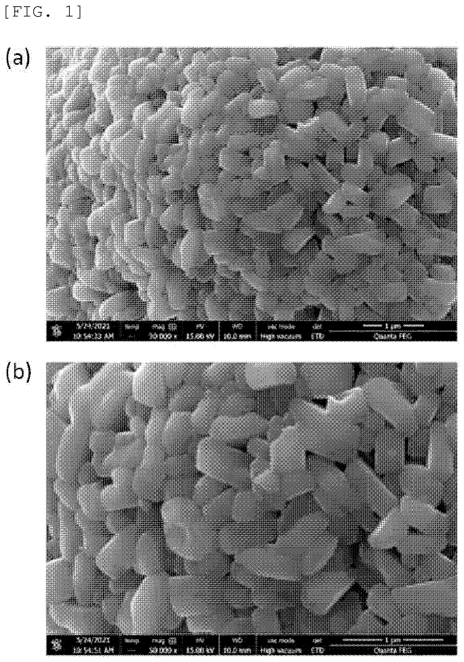

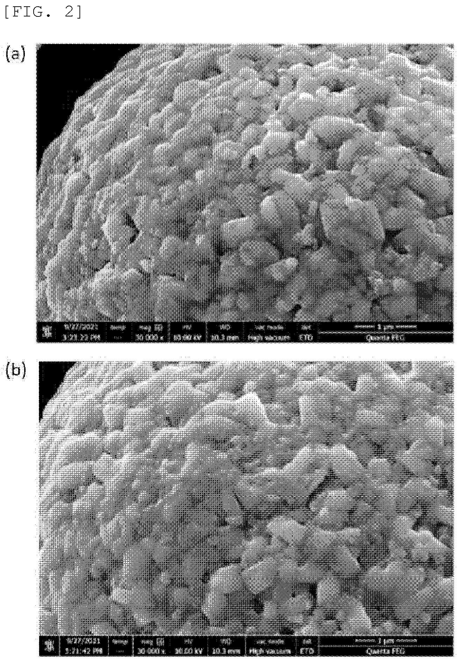

FIG. 1(a) and FIG. 1(b) are respectively SEM images of surfaces of the positive electrode active materials prepared in Examples 1 and 2, and FIG. 2 is an SEM image of surfaces of the positive electrode active materials prepared in Comparative Example 1 and Comparative Example 4.

As shown in FIG. 1(a) and FIG. 1(b), in the case of the positive electrode active materials according to Examples 1 and 2, it was confirmed that a residual Co source was not visible, and coated to the inside of the secondary particles through the interface of the primary particle. On the other hand, in the case of FIG. 2, unreacted Co or a B solid solution was identified, and it was found that the surface portion of the secondary particle was thick, thereby causing a decrease in capacity. It is understood that this is because a coating layer was formed by simultaneously using a cobalt ion-containing source and a boron coating source, or the reaction of Co was disturbed.

### Experimental Example 2

For the positive electrode active materials of Examples 1 and 2, and Comparative Examples 1 to 4, the metal element distribution and content were analyzed using TEM (Device name: Titan G2 80-200 ChemiSTEM w/ Gatan Continuum S EELS system, FEI Company), and before the analysis, TEM samples having a thickness of 70 nm or less were prepared using FIB (Device name: Helios G4 UX, FEI Company) equipment capable of target sampling of positive electrode active material particles.

Specifically, for the surface of the lithium transition metal oxide secondary particle, specifically a primary particle positioned at a depth of 20 nm from the outermost surface layer, the content (mol%) of each metal was calculated and is shown in Table 1 below.

**[Table 1]**

| | Ni | Co | Mn | Al |
|---|---|---|---|---|
| Example 1 | 76.8 | 17.7 | 2.3 | 3.2 |
| Example 2 | 76.1 | 19.0 | 1.8 | 3.1 |
| Comparative Example 3 | 91.3 | 4.1 | 1.6 | 3.0 |
| Comparative Example 4 | 60.4 | 34.7 | 1.9 | 3.0 |

In addition, for the inside of the lithium transition metal oxide secondary particle, specifically a primary particle positioned at a depth of 5 um to 6 um from the outermost surface layer, the content (mol%) of each metal was calculated and is shown in Table 2 below.

**[Table 2]**

| | Ni | Co | Mn | Al |
|---|---|---|---|---|
| Example 1 | 75.3 | 19.5 | 2.3 | 2.9 |
| Example 2 | 79.5 | 15.2 | 2.5 | 2.8 |
| Comparative Example 3 | 91.5 | 4.0 | 1.9 | 2.6 |
| Comparative Example 4 | 90.1 | 5.3 | 2.1 | 2.5 |

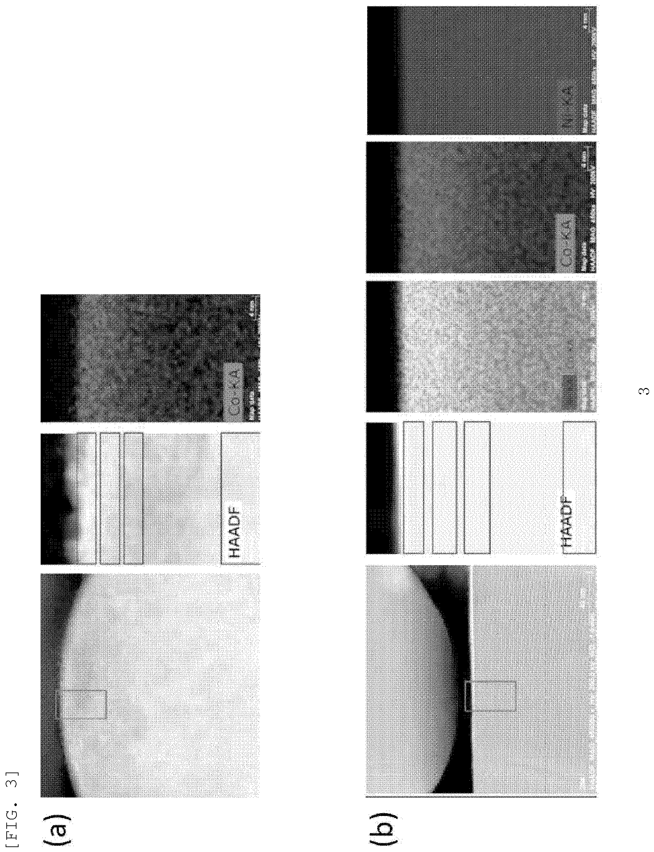

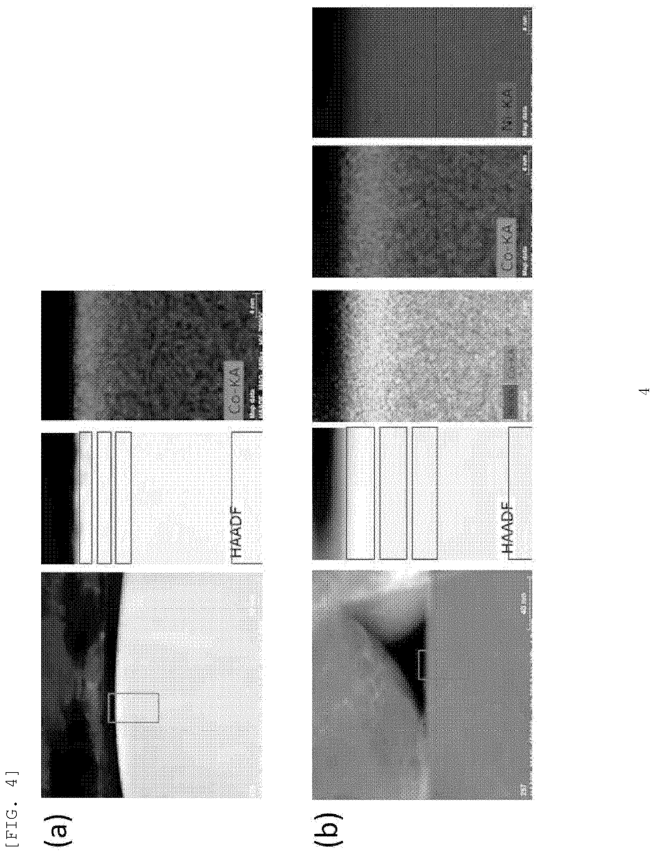

The TEM data of Examples 1 and 2 and Comparative Example 3 are also shown in FIGS. 3 to 5.

As shown in Tables 1 and 2 above, the positive electrode active materials of Examples prepared according to the present invention showed a higher content of cobalt in both the primary particle positioned on the surface of the secondary particle and the primary particle positioned inside of the secondary particle than Comparative Examples. Through the above, it was confirmed that a cobalt-containing coating layer was formed at the interface between the primary particles in the overall region of the surface and inside of the secondary particle.

### Experimental Example 3

Lithium secondary batteries were manufactured using the positive electrode active materials prepared in Examples and Comparative Examples, and resistance properties were evaluated for each of the lithium secondary batteries.

Specifically, a positive electrode slurry was prepared by mixing each of the positive electrode active materials, a carbon black conductive material, and a polyvinylidene fluoride binder in an N-methylpyrrolidone solvent at a weight ratio of 97.5:1.0:1.5. The positive electrode slurry was applied on one surface of an aluminum current collector, dried at 130 °C, and then roll-pressed to manufacture a positive electrode.

Next, a composition for forming a negative electrode was prepared by mixing a negative electrode active material (natural graphite), a conductive material (carbon black), and a binder (SBR + CMC) in water at a weight ratio of 95:1.5:3.5. The composition for forming a negative electrode was coated on a copper current collector, dried, and then roll-pressed to manufacture a negative electrode.

A porous polyethylene separator was interposed between the positive electrode and the negative electrode manufactured above to manufacture an electrode assembly, and the electrode assembly was placed inside a battery case, and then an electrolyte solution was injected into the case to manufacture a lithium secondary battery. At this time, as the electrolyte solution, an electrolyte solution prepared by dissolving 1 M of LiPF₆ in an organic solvent in which ethylene carbonate (EC) :dimethyl carbonate (DMC) :ethylmethyl carbonate (EMC) were mixed at a volume ratio of 3:4:3 was injected to manufacture a lithium secondary battery according to each of Examples 1 and 2, and Comparative Examples 1 to 4.

Coin half-cells were manufactured respectively using the positive electrodes manufactured as described above and a lithium metal as a negative electrode, and each of the coin half-cells was charged to 4.25 V with 0.1 C/0.05 C constant current/constant voltage at 25 °C, and then discharged to 2.5 V with a 0.1 C constant current to measure the initial charge capacity and the initial discharge capacity.

**[Table 3]**

| | Charge capacity (mAh/g) | Discharge capacity (mAh/g) |
|---|---|---|
| Example 1 | 241.5 | 224.1 |
| Example 2 | 242.4 | 225.4 |
| Comparative Example 1 | 238.5 | 215.5 |
| Comparative Example 2 | 241.2 | 224.2 |
| Comparative Example 3 | 241.9 | 223.2 |
| Comparative Example 4 | 237.9 | 212.5 |
| Comparative Example 5 | 236.8 | 211.9 |

The lithium secondary batteries (3 cm × 4 cm full cell) manufactured above were charged to 4.25 V with a 0.3 C constant current at 25 °C, and for each of the secondary batteries initially charged/discharged to 2.5 V with a 0.33 C constant current, 100 cycles of charging and discharging were performed, wherein one cycle was set to performing charging to 4.25 V with 0.33 C/0.05 C constant current/constant voltage at 45 °C and then performing discharging to 2.5 V with a 0.33 C constant current.

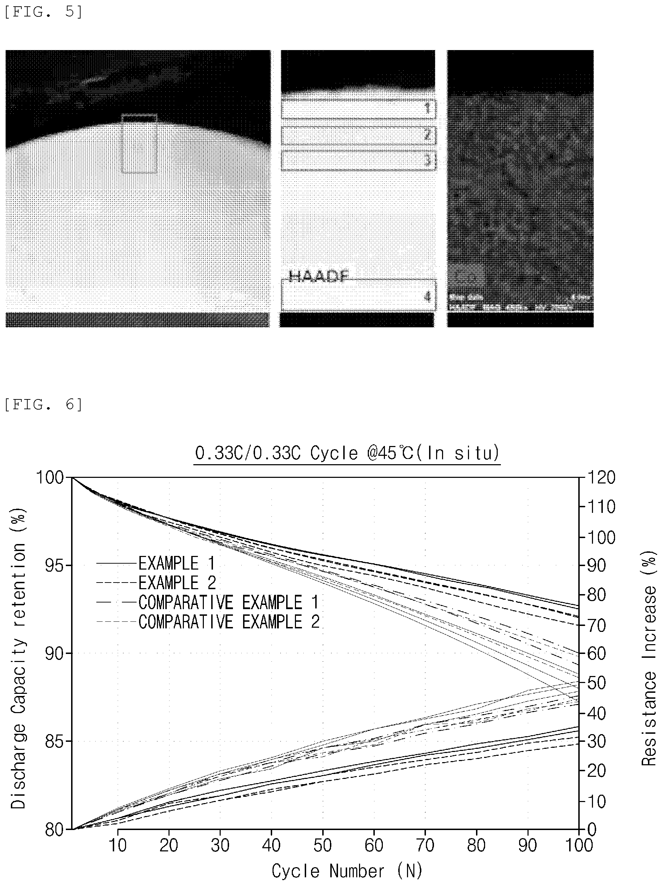

The capacity retention rate was expressed as a percentage of the capacity maintained in the 100-th cycle compared to the capacity in the first cycle, and the resistance increase rate was expressed as a percentage of the resistance increased in the 30-th cycle compared to the resistance of the first cycle. In addition, the results are shown in FIG 6.

**[Table 4]**

| | Capacity retention rate (%) | Resistance increase rate (%) |
|---|---|---|
| Example 1 | 92.46 | 34.35 |
| Example 2 | 91.92 | 29.90 |
| Comparative Example 1 | 89.71 | 44.50 |
| Comparative Example 2 | 89.39 | 43.56 |
| Comparative Example 3 | 88.03 | 47.87 |
| Comparative Example 4 | 90.02 | 42.54 |
| Comparative Example 5 | 89.19 | 44.01 |

As described above, it has been confirmed that when the positive electrode active material prepared according to the present invention is used in a secondary battery, it is possible to manufacture the secondary battery capable of implementing a capacity without a decrease in initial capacity, and having an excellent capacity retention rate and a low resistance increase rate, thereby having improved lifespan properties.

### Experimental Example 4

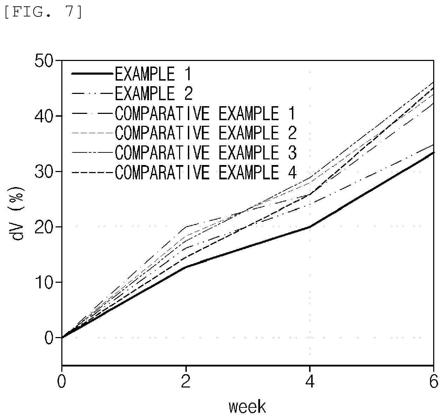

The secondary battery manufactured in Experimental Example 1 was stored at 60 °C for up to 6 weeks while observing the amount of gas generation. The volume increase rate (%) with respect to the initial volume was calculated to compare with the amount of gas generation. In addition, the results are shown in FIG 7.

**[Table 5]**

| | After 2 weeks | After 4 weeks | After 6 weeks |
|---|---|---|---|
| Example 1 | 12.72 | 19.83 | 33.51 |
| Example 2 | 16.21 | 23.96 | 34.66 |
| Comparative Example 1 | 19.49 | 25.68 | 42.26 |
| Comparative Example 2 | 18.35 | 27.95 | 44.16 |
| Comparative Example 3 | 17.32 | 28.56 | 45.87 |
| Comparative Example 4 | 14.32 | 25.54 | 44.96 |
| Comparative Example 5 | 20.11 | 31.79 | 50.40 |

As shown in the above results, it was confirmed that when the positive electrode active materials of Examples were used, the gas generation was significantly reduced, resulting in the decrease in volume increase.

### Experimental Example 5

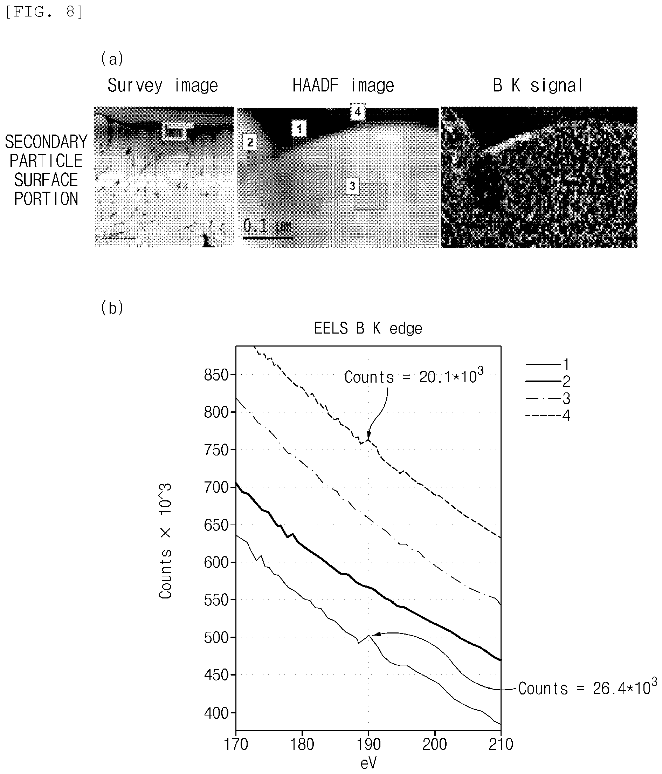

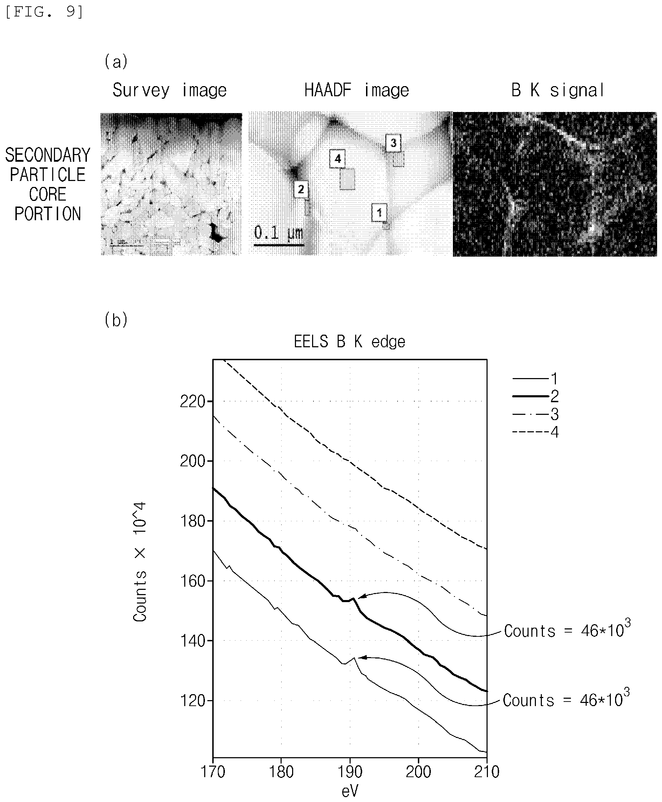

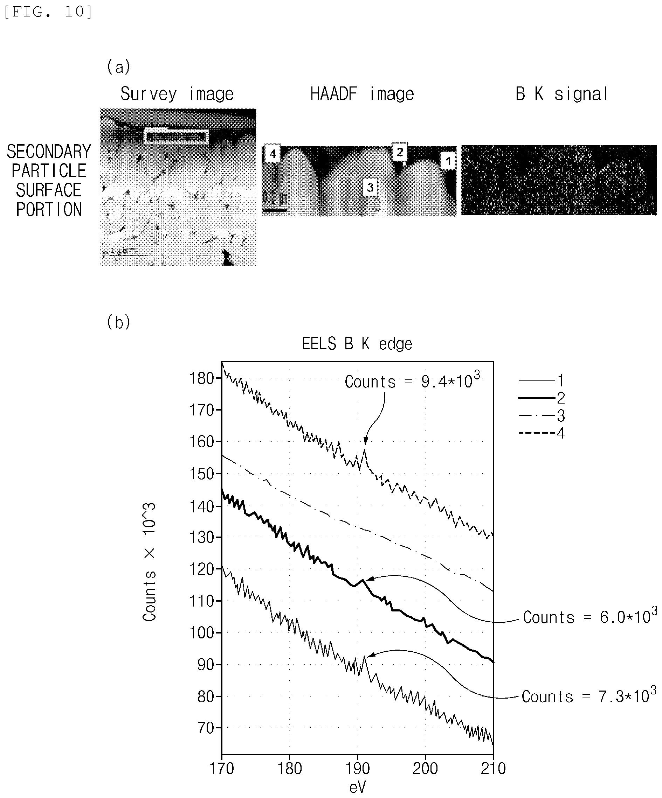

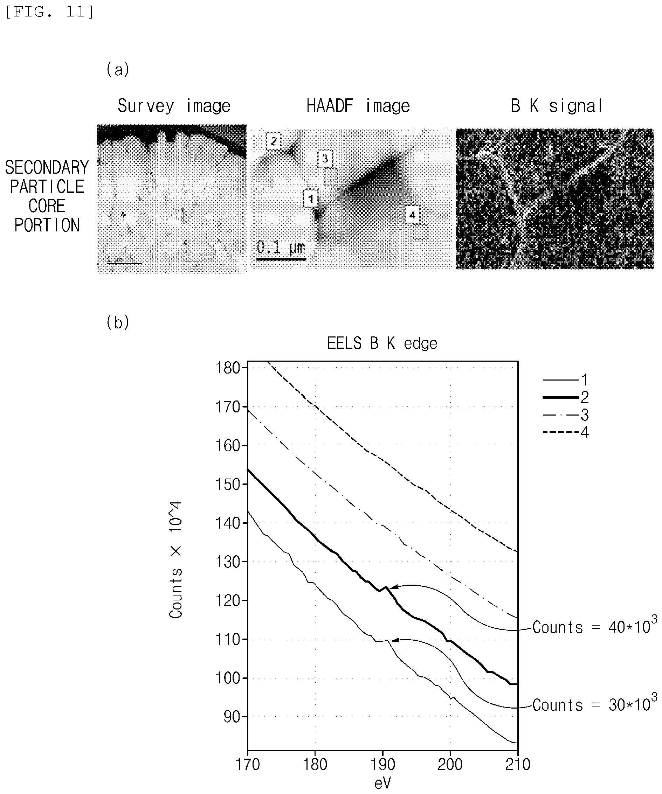

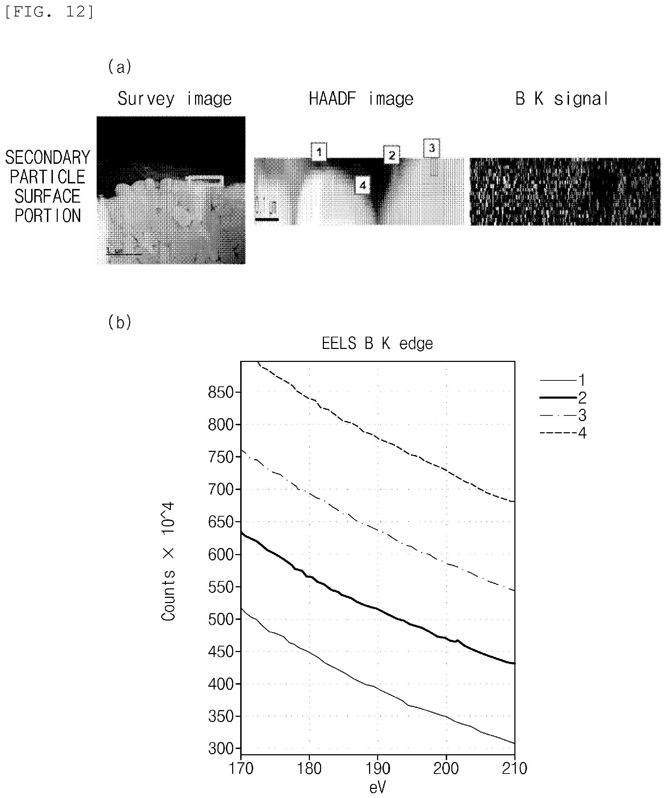

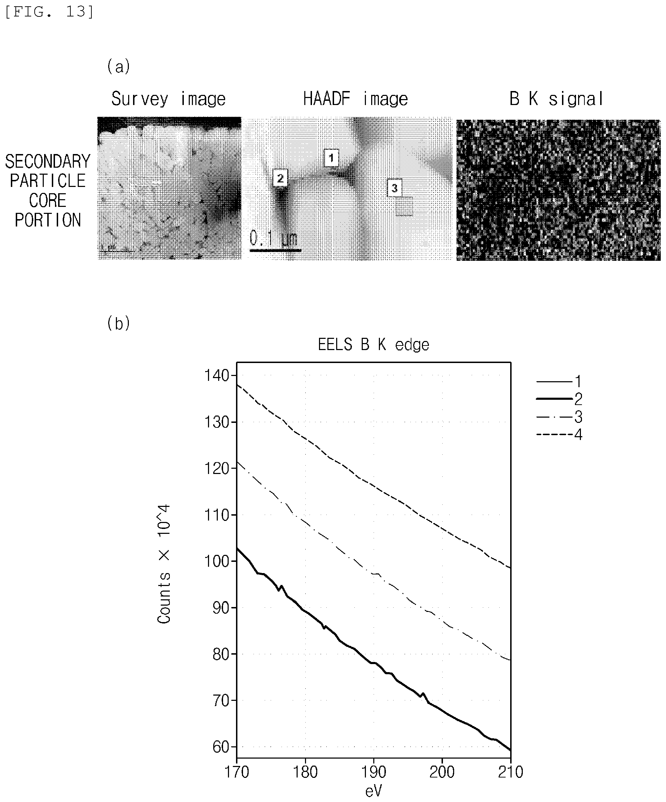

FIG. 8 to FIG. 13 show the results of analyzing the boron element distribution and content for each of the positive electrode active materials by using TEM (Device name: Titan G2 80-200 ChemiSTEM w/ Gatan Continuum EELS system, FEI Company).

Specifically, before the analysis, TEM samples having a thickness of 70 nm or less were prepared using FIB (Device name: Helios G4 UX, FEI Company) equipment capable of target sampling of positive electrode active material particles, and the measurement conditions were an acceleration voltage of 200 kV and a dispersion of 0.05 eV/channel.

In addition, first peaks and second peaks were measured through the TEM-EELS spectrum and the values were summarized.

**[Table 6]**

| | First peak | Second peak | First peak : Second peak |
|---|---|---|---|
| Example 1 | 20.1*10³ / 26.4*10³ | 46*10³ | 1:2.3 / 1:1.74 |
| Example 2 | 9.4*10³ / 6.0*10³ / 7.3*10³ | 40*10³ / 30*10³ | 1:4.26 / 1:3.12 / 1:6.67 / 1:5 / 1:5.48 / 1:4.11 |
| Comparative Example 5 | | | |

As shown in Table 6 above, it was confirmed that the positive electrode active materials of Examples 1 and 2 according to the present invention exhibited a first peak and a second peak, through which the presence of boron was identified.

## Claims

1. A method for preparing a positive electrode active material, the method comprising:
(S1) preparing a positive electrode active material precursor including nickel, cobalt, and manganese, and containing 60 mol% or greater of nickel in all metals excluding lithium;
(S2) mixing the positive electrode active material precursor with a lithium raw material and performing primary heat treatment thereon at 660 °C to 800 °C to form a lithium transition metal oxide in the form of a secondary particle in which primary particles are aggregated;
(S3) mixing the lithium transition metal oxide with a cobalt ion-containing source and performing secondary heat treatment thereon at 640 °C to 800 °C to form a secondary heat-treated product;
(S4) washing the secondary heat-treated product; and
(S5) dry-mixing the washed secondary heat-treated product with a boron coating source and performing heat treatment thereon.

2. The method of claim 1, wherein the step (S3) is for forming a cobalt-containing coating layer at the interface between the primary particles constituting the lithium transition metal oxide secondary particle.

3. The method of claim 1, wherein the lithium transition metal oxide is represented by Chemical Formula 1 below:
[Chemical Formula 1] LiₐNi_{1-(b+c+c)}Co_{b}Mn_{c}Q_{d}O₂
wherein the above chemical formula,
Q is one or more selected from the group consisting of Al, Si, V, Nb, Mo, Ta, Y, La, Sn, Zr, B, W, Mg, Ce, Hf, Ta, Ti, Sr, Ba, F, P, S, and La, and
0.9≤a≤1.1, 0≤b≤0.2, 0≤c≤0.2, 0≤d≤0.1, and 0<b+c+d≤0.4.

4. The method of claim 1, wherein the primary heat treatment is performed at 660 °C to 790 °C.

5. The method of claim 1, wherein the secondary heat treatment is performed at 660 °C to 780 °C.

6. The method of claim 1, wherein the step (S4) is performed for 3 minutes to 60 minutes using a washing solution of 1 °C to 90 °C.

7. The method of claim 1, wherein the cobalt ion-containing source is one or more selected from the group consisting of Co(OH)₂, Co₂O₃, CoCO₃, Co₅(CO₃)₂(OH)₆, Co₃(PO4)₂, CoF₃, CoOOH, Co(OCOCH₃)₂·4H₂O, Co (NO₃)·6H₂O, Co₃O₄, Co(SO₄)₂·7H₂O, and CoC₂O₄.

8. The method of claim 1, wherein the boron coating source is one or more selected from the group consisting of H₃BO₃, B₄C, B₂O₃, BF₃, (C₃H₇O)₃B, (C₆H₅O)₃B, [CH₃(CH₂)₃O]₃B, C₁₃H₁₉O₃, C₆H₅B(OH)₂, and B₂F₄.

9. A positive electrode active material comprising a lithium transition metal oxide containing nickel, cobalt, and manganese, and in the form of a secondary particle in which primary particles are aggregated,
wherein:
a cobalt-containing coating layer is formed at the interface between the primary particles positioned on the surface and inside of the lithium transition metal oxide secondary particle, wherein the primary particle has a content of 7.0 mol% or greater of cobalt with respect to all metals; and
a spectrum measured for the lithium transition metal oxide by TEM-EELS, which is a combination of transmission electron microscopy (TEM) and electron energy loss spectroscopy (EELS), includes a first peak in a region corresponding from the surface of a primary particle positioned in a surface portion of the secondary particle to a depth of 50 nm, and a second peak in a region corresponding from the surface of a primary particle positioned in a core portion of the secondary particle to a depth of 50 nm, wherein:
the surface portion of the secondary particle is a region corresponding from the surface of the secondary particle to a depth of 50 nm from the surface of the same; and
the core portion of the secondary particle is a region corresponding from the surface of the secondary particle to a depth greater than 3 um, wherein the first peak and the second peak are peaks in the range of 180 eV to 200 eV in the TEM-EELS spectrum.

10. The positive electrode active material of claim 9, wherein the intensity ratio of the first peak and the second peak is 1 : 0.5 to 1 : 20.

11. The positive electrode active material of claim 9, wherein the primary particle has a content of cobalt of 10.0 mol% or greater with respect to all metals.

12. The positive electrode active material of claim 9, wherein the lithium transition metal oxide has a concentration gradient in which cobalt gradually decreases from the surface of the primary particle to the center thereof.
